# EUROPEAN PATENT APPLICATION

(11) **EP 0 620 530 A2**
(43) Date of publication of application: **19.10.1994**
(21) Application number: 94105609.5
(22) Date of filing: 12.04.1994
(51) Int. Cl.: G06F 15/72

(54) **Method of and apparatus for editing two-dimensional data for generating three-dimensional data**

(30) Priority: 13.04.1993 JP 86104/93; 13.04.1993 JP 86105/93
(71) Applicant: NIPPON STEEL CORPORATION, Tokyo 100-12 (JP)
(72) Inventor: Shibusawa, Tetsuo, Chiyoda-ku, Tokyo (JP); Hirono, Hajimu, Chiyoda-ku, Tokyo (JP)
(74) Representative: VOSSIUS & PARTNER

(57) **Abstract**

A method of and an apparatus for editing two-dimensional data representing a shape of a three-dimensional object for generating a modification of the three-dimensional object are arranged such that image data representing a perspective view of the three-dimensional object and vector data representing line segments and points on a figure associated with the perspective view and including at least one sectional line showing a section of the three-dimensional object are displayed in superposition on a display surface, the two-dimensional data is corrected so as to change at least a part of the figure according to the modification of the three-dimensional object thereby obtaining corrected two-dimensional data and three-dimensional data representing the modification of the three-dimensional object is determined based on the corrected two-dimensional data and displayed.

## Description

This invention relates to a method of and apparatus for editing two-dimensional data for generating three-dimensional data. More particularly, it relates to a method of and an apparatus for editing two-dimensional data of an original three-dimensional object expressed as a perspective view.

It is often desired to determine three-dimensional object data representing positions expressed by three-dimensional coordinates of those points constituting an appearance shape of an original three-dimensional object from a perspective view projecting the three-dimensional object on a two-dimensional plane.

Here, the perspective view projected on the two-dimensional plane includes a photograph, an electronic image, a sketch, a picture, and an image displayed on a display device in a CAD (Computer Aided Design) system or a graphic processing system. For example, it is often desired to form a model of a three-dimensional object on the basis of a sketch of the three-dimensional object worked out by an industrial designer in order to design the appearance of a product. When two or more perspective views drawn from different visual points are available, a method based on a binocular stereoscopic vision method can be applied, as disclosed, for example, in "Modeling of 3-Dimensional Shape from Drawings" Nishihara, Computer Today July, 1993, No. 56 pp. 19-29, 48-52. However, when the perspective view available is only one, the sole method known heretofore is for an object which is plane-symmetrical, as disclosed in, for example, in JP-A-3-154972, "Recovery of 3D information from a 2D image Using the Mirror Symmetry in the Object" Z. Kiuwei et al, Bulletin of JSSD No. 78, 1990, or "Automatic Reconstruction of a Polyhedron from Orthographic Views" Masuda et al, CG symposium '92, September, 1992, pp. 105-114.

In Japanese patent application No. 4-296775 entitled "Method of and Apparatus for determining object Data from Perspective View" (corresponding to U.S. Patent Application Serial No. 08/147,316 and EP Patent Application No. 93117970.9 both filed on November 9, 1993), a novel method is proposed to generate object data of a three-dimensional object, which is not limited to a plane-symmetric one, from one perspective view. This method uses a perspective view of the type in which a sectional line of an object (corresponding to a slice of the object) is drawn. By the method, an equation representing a plane of the slice in the three-dimensional space inclusive of the perspective view is then determined from the positional relationship between the vanishing point corresponding to the plane of the slice and a visual point of the perspective view, the sectional line is projected on a plane (inside the three-dimensional space) expressed by the equation so obtained, with the visual point being the center of projection, and the object data are acquired from the projected image. In this case, it is general to handle the sectional lines in the perspective view as vector data, to apply arithmetic processing to this vector data, and to acquire the object data in the three-dimensional space.

A typical example of the application of the method of generating object data from one perspective view by utilizing the sectional lines is the case where the object data is acquired from a sketch drawn by a designer. In such a case, it is very important to obtain the object data with expresses correctly the image of the designer, and the original perspective view or the sectional lines are corrected in many cases with reference to the acquired object data so as to obtain corrected object data. In this case, the correction work is carried out by the designer by himself. However, an edition method suitable for such a correction work has not yet been established, and a problem has yet been left unsolved in that the procedures are much complicated and difficult.

In the CAD system or the graphic processing system, on the other hand, a figure of a processing object is generally stored as vector data representing points, line segments, sectional lines, etc, constituting the figure. When a correction processing or the like is applied to this figure, a part of the figure to be corrected is selected from the figure displayed on a display such as a CRT, and a pointing device such as a mouse or a track ball is used for executing the correction of the selected part.

A pointer display (e.g. arrow display) corresponding to this pointing device is displayed on the display screen when the pointing device is used, and is moved on the screen in accordance with the operation quantity of the pointing device. To select a specific figure on the screen, the pointing device is operated so as to move the pointer display to a point on the specific figure, and a select button provided to the pointing device is once depressed and immediately released (so-called "click" operation). When the specific figure is moved in the CAD system, etc, the specific figure as the object of movement is selected in the manner described above, and while the select button is kept depressed, the pointing device is manipulated to move the pointer display (so-called "dragging"). Then, the figure as the object of movement moves with the movement of the pointer display. The movement of the figure is completed by releasing the button at a time when the figure is positioned to an intended position of movement. JP-A-4-310186 and JP-A-4-342072 disclose auto-tracing technology in a CAD (computer Aided Design)/CAM (Computer Aided Manufacturing) system.

The conventional selection method of the graphic data described above is not free from a problem that when a plurality of figures are close to one another or overlapped, an undesired figure or figures are incorrectly selected. Particularly when a figure of a processing object is selected by designating in advance the processing contents such as reversal and delection, the processing is effected simultaneously with the selection of the figure so that an unexpected processing to an operator might be executed.

It is an object of the present invention to provide, in order to generate three-dimensional data expressing a shape of a corrected three-dimensional object obtained by partially correcting a three-dimensional object, a method of and an apparatus for editing two-dimensional data representing a figure associated with a perspective view including at least one sectional line showing a section of the three-dimensional object.

According to the present invention, there is provided a method of editing two-dimensional data representing a shape of a three-dimensional object for generating three-dimensional data representing a modification of the three-dimensional object, wherein the two-dimensional data includes image data representing a perspective view of the three-dimensional object and vector data representing line segments and points, which method comprises the steps of displaying the image data and the vector data in superposition on one display surface; correcting the two-dimensional data in such a manner as to change at least a part of the figure associated with the perspective view selected in accordance with the modification of the three-dimensional object, and determining corrected two-dimensional data; and generating three-dimensional data representing the modification of the three-dimensional object from the corrected two-dimensional data, and simultaneously displaying the three-dimensional data.

According to the present invention, there is also provided an apparatus for editing two-dimensional data representing a shape of a three-dimensional object for generating three-dimensional data representing a modification of the three-dimensional object, wherein the two-dimensional data includes image data representing a perspective view of the three-dimensional object and vector data representing line segments and points, which apparatus comprises first memory means for storing the image data; second memory means for storing the vector data; display means having a display surface; means for superposing a figure associated with the perspective view represented by the vector data on a perspective view of the three-dimensional object represented by the image data, on the basis of the image data and the vector data stored in the first and second memory means, respectively, and displaying the figure on the display surface; command input means for inputting a command relating to a mode of correction of the vector data corresponding to a desired modification of the three-dimensional object; means for applying correction to the two-dimensional data corresponding to the command on the basis of the command, and generating corrected two-dimensional data; and display means for generating corrected three-dimensional data representing a modification of the three-dimensional object on the basis of the corrected two-dimensional data, and simultaneously displaying the corrected three-dimensional data on the display surface.

The invention is described in detail in connection with the drawings, in which:
Fig. 1 is a structural block diagram showing a circuit construction of an apparatus for executing a figure selection method used in the first embodiment of the present invention;
Fig. 2 is a flowchart showing each step of the figure selection method used in the first embodiment of the present invention;
Fig. 3 is a perspective view showing an example of a two-dimensional figure before processing according to the present invention;
Figs. 4 and 5 are perspective views showing an example of the two-dimensional figure processed by the method shown in Fig. 2;
Fig. 6 is a block diagram showing a circuit construction of an apparatus for executing a two-dimensional data edition method according to the first embodiment of the present invention;
Fig. 7 is a flowchart showing the steps carried out by the two-dimensional data edition method according to the first embodiment of the present invention;
Figs. 8A and 8B are explanatory views useful for explaining the operation for converting a plurality of continuous line segments int one line;
Fig. 9 is a schematic view showing an example of the structure of an icon display section;
Fig. 10 is a diagram showing an example of simultaneous display of a two-dimensional image and a three-dimensional image;
Fig. 11 is a diagram obtained after edition processing has been applied to the two-dimensional image shown in Fig. 10;
Fig. 12 is a diagram showing another example of simultaneous display of a two-dimensional image and a three-dimensional image;
Fig. 13 is a diagram obtained when display of perspective lines is stopped in the two-dimensional image display shown in Fig. 12;
Fig. 14 is a diagram obtained when display of image data is stopped in the two-dimensional image display shown in Fig. 12;
Fig. 15 is a diagram showing still another example of simultaneous display of the two-dimensional image and the three-dimensional image; and
Fig. 16 is a diagram showing an example where a perspective line command is executed to the two-dimensional image display shown in Fig. 12.

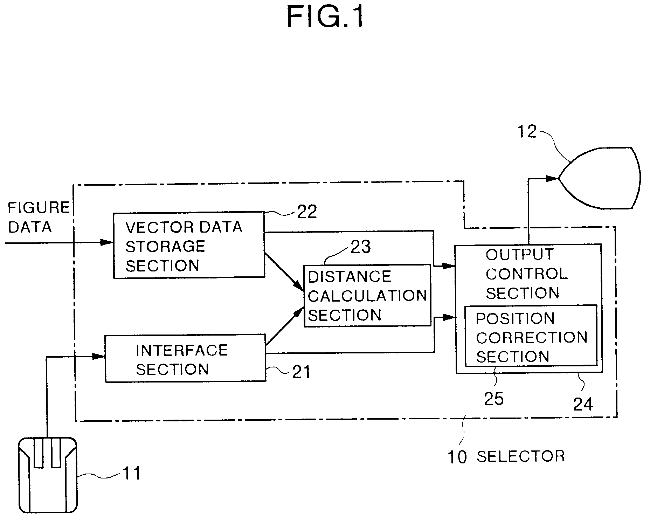

To generate three-dimensional data representing the shape of a corrected three-dimensional object obtained by partly correcting a three-dimensional object, it becomes often necessary to select one of a plurality of figures constituting a two-dimensional image such as a perspective view representing an original three-dimensional object and including sectional lines thereof and to execute correction processing for the selected figure. Therefore, prior to the explanation of embodiments of the invention, a method of and an apparatus for selecting a figure to which correction is to be applied will be first explained with reference to Figs. 1 to 5 of the accompanying drawings.

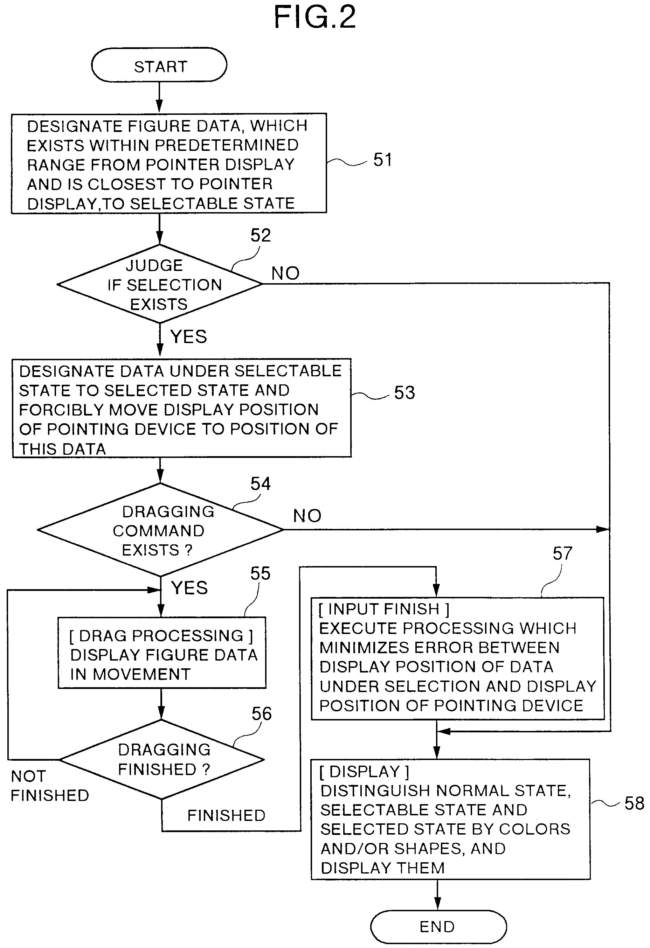

Fig. 1 shows an example of the construction of an apparatus for executing the figure selection method used in the present invention, and Fig. 2 is a flowchart showing the steps of the method.

In Fig. 1, a selector 10 is shown as being connected to a pointing device 11 such as a mouse and a display 12 such as a CRT. The selector 10 includes an interface section 21 to which the pointing device 11 is directly connected, a vector data storage section 22 for storing figure data as vector data, a distance calculation section 23, and an output control section 24 for causing the display 12 to display the figure data and pointer display of the pointing device. The figure data include dot data, line data, sectional line data, etc, and each of these data assumes any of the normal state, selectable state and selected state. Each state is distinguished from the others by changing display color or line appearance of the figure data. For example, white, red and green are allocated to the figure data under the normal state, the selectable state and the selected state, respectively.

The information of the moving operation to the pointing device 11 and the information as to whether or not a select command is inputted through the pointing device 11 are inputted to the interface section 21. Here, the information of the moving operation is a moving distance of a mouse when the pointing device 11 is the mouse. The figure data is supplied to the vector data storage section 22 from outside through known input means such as a scanner (not shown). The distance calculation section 23 calculates the shortest distance between the pointer display position and the figure data position on the screen. The output control section 24 makes display/selection control and also controls a dragging operation. It retrieves one figure data, which exists within a predetermined range of distance from the position of the pointer display on the screen and is closest thereto, as the proximate figure, and shifts the state of this proximate figure data to the selectable state if the proximate figure is the figure data under the normal state. Accordingly, the output control section 24 shifts the state of the proximate figure to the selectable stage and at the same time, changes its display color. A known position correction section 25 is disposed inside the output control section 24 in order to minimize a position error between the pointer display and the display position of the figure data when the dragging operation is carried out.

Next, the operation of this embodiment will be described with reference to a flowchart of Fig. 2. The figure data is in advance stored in the vector data storage section 22. Though the start and end of the flow of control are shown in the flowchart of Fig. 2, the operation shown in the flowchart is repeated in practice within a very short time because the operation is executed on the real time basis in response to the movement of the pointing device 11.

First, the distance calculation section 23 calculates the distances between the pointer display and the respective figure data on the screen of the display 12, which are applied to the output control section 24, where the figure data which exists within a predetermined range of distance from the pointer display and is closest thereto (proximate figure) is searched out. The figure data thus searched out is brought into the selectable state (step 51). In this case, if the proximate figure is under the selectable state, this state is maintained, which also maintaining the state of other figure data. Then whether or not a select command is given is judged (step 52). Here, if the pointing device 11 is the mouse, the select command is given by click of a select button of the mouse. When the selection is not instructed, the flow proceeds to step 58 and display processing is executed. By this display processing, the respective figure data are displayed on the screen, while distinguished by colors or shapes correspondingly to the normal state, the selectable state and the selected state respectively.

When the select command is detected at step 52, on the other hand, the state of the figure data under the selectable state is switched to the selected state, and the pointer display is automatically moved to the display position of this figure data (step 53). Whether or not a dragging command is given is confirmed (step 54). When the pointing device 11 is the mouse, the confirmation of the dragging command is carried out by detecting whether or not the left button of the mouse is continuously kept depressed. When the dragging command is not given, the operation is a mere selection operation. Therefore, the flow proceeds to step 58 described above, and display is effected in accordance with the state of the figure data. When the dragging command is given at step 54, dragging processing 55 is executed. This dragging processing moves both of the position of the selected figure and the position of the pointer display on the screen in accordance with the moving operation of the pointing device 11 (step 55). Whether or not dragging is completed is then judged (step 56). When the pointing device 11 is the mouse, finishing of dragging can be judged by detecting whether or not depression of a select button of the mouse is stopped. When dragging is not completed, the flow returns to step 55 and the dragging processing is iterated.

When finishing of dragging is detected at step 56, the input end processing is executed by the position correction section 25 (step 57). This input end processing is the one which minimizes the error between the display position of the selected figure data on the screen and the position of the pointer display. This processing is executed for the following reason. As the dragging processing of step 55 is repeated in the case where a figure is displayed on the screen by multiplying the original vector data by a predetermined enlargement ratio or reduction ratio, the error gradually accumulates, so that the pointer display deviates from the figure data, although the display positions of both of them are brought into conformity at step 53. It is generally considered that the position of the pointer display corresponding to the pointing device 11 better reflects the intention of an operator. Therefore, correction of the original vector data is made in this input end processing so as to minimize the error described above. Thereafter, the flow proceeds to step 58 described above, and the display processing is executed. The above correction processing of the original vector data is well known in the art and hence detailed explanation thereof will be omitted.

Next, this embodiment will be explained about a definite example, which is utilized in generation of data of an object from a perspective view.

The term "generation of object data from perspective view" means acquisition of three-dimensional data of an object from one perspective view drawing (projecting) the object such as a photograph, a sketch, etc, as described in Japanese patent application No. 4-296775 entitled "Method of and Apparatus for Generating Object Data from Perspective View", corresponding to U.S. patent application serial No. 08/147,316. This technology acquires three-dimensional data of an object, when the object is sliced by a plane, by determining an equation expressing the plane from a sectional line representing the slice, the position of vanishing point corresponding to the plane and the position of a visual point of the perspective view, and calculating a projected image of the sectional line onto the plane expressed by the equation as determined. In this case, the sectional line corresponds to the projected image, and they may be initially drawn on the perspective view, or may be supplemented later to the perspective view using a graphic processing system. In either case, the sectional line is preferably stored as line data or vector data in the processing system for ease of computation. A processing is often executed to obtain desired data by changing the positions of the sectional line and vanishing point by sequentially referring to the three-dimensional object data thus obtained. This embodiment deals with the case where the sectional line and the vanishing point are selected and their positions are corrected using the selector of the embodiment.

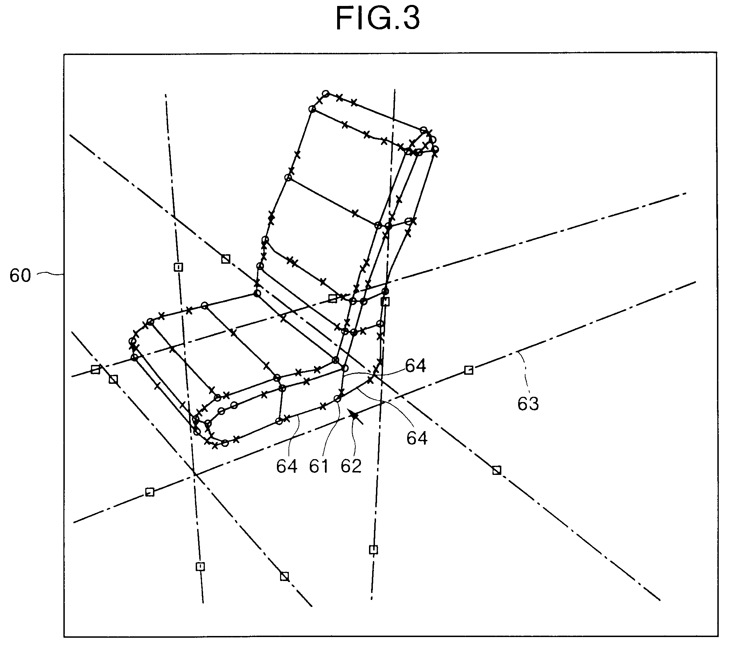

Fig. 3 shows the state where sectional lines (solid lines) extracted from a perspective view depicting a seat for a vehicle are displayed on a display screen 60. The sectional lines are used in order to acquire three-dimensional data of the seat for a vehicle and are expressed as assemble of a plurality of line data. One-dot chain line represents a perspective line corresponding to each vanishing point, circle ○ represents an end point, X represents a passing point, and □ represents a point for operating the perspective line. Each sectional line is divided into individual line segments at respective end points or passing points. Let's take an example of the end point 61 and consider the case where the dragging operation is applied to this end point 61.

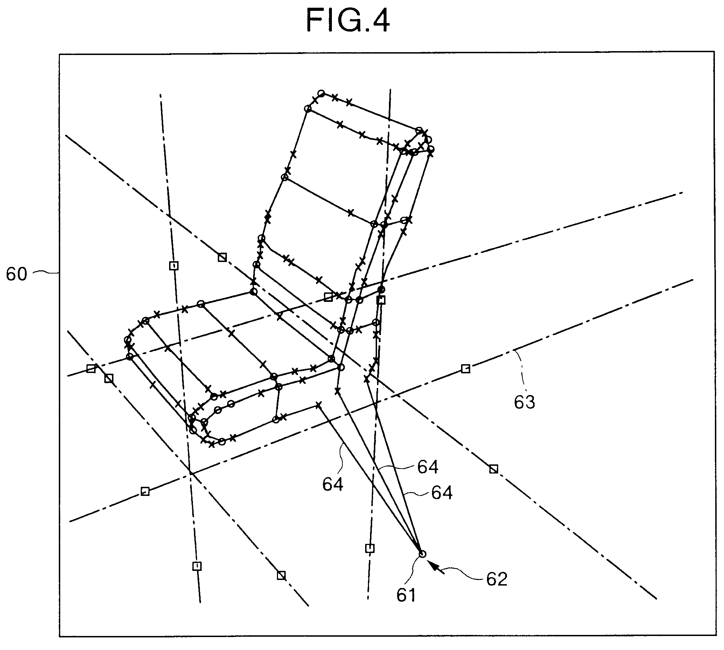

First, the pointing device is operated so as to bring the pointer display 62 indicated by an arrow close to the end point 61. Then, the end point 61 shifts from the normal state to the selectable state, and the display mode of the end point 61, e.g. the display color, changes. When the select operation is carried out, the end point 61 is shifted to the selected state, and the dragging operation is simultaneously carried out. The result of this dragging operation is shown in Fig. 4.

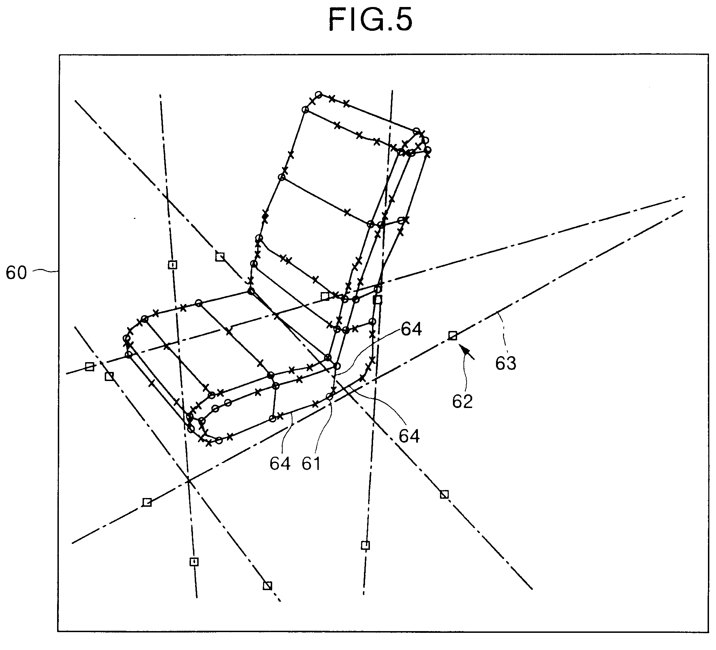

Three line elements 64 constituting the sectional line exist in the proximity of the end point 61, and the selection method of this embodiment can precisely select the desired figure data, that is, the end point 61. Fig. 5 shows the result of the dragging operation similarly carried out for the perspective line 63.

In this embodiment, each figure data can take any of the selectable state, the normal state and the selected state. The normal state means the state where the figure data is not permitted to receive a predetermined process, and the selected state is the state where it is selected for receiving the predetermined process. In contrast, the selectable state represents the state where the figure data is not selected but is ready for receiving the process. Here, the display mode of the figure data under the normal state is made different from the display mode of the figure data under the selectable state and only the figure data which exists within a predetermined range of the pointer display of the pointing device and the closest thereto is allowed to shift to the selectable state so that it is possible for the operator to visually confirm which figure is selectable before the select operation is carried out in practice. In other words, when the pointer display is positioned to a certain position, the display mode of the figure data in the proximity of this certain point changes, so that when the select operation such as clicking is effected, the figure which is practically selected can be confirmed. As a result, when the display mode of an undesired figure data changes, it means that the selection operation should not be carried out. Accordingly, the pointing device is operated in such a manner as to move the pointer display and to change the display mode of the figure data which is desired to be selected, and thereafter the selection operation may be carried out. If the arrangement is so made as to compulsively move the position of the pointer display to the display position of the figure data with the selection operation described above, the figure data selected in practice can be more clearly confirmed. Thus, the operator can confirm whether or not his intended figure is shifted to the selectable state based on the display mode of the figure. If he has found that any other figure than his intended figure is shifted to the selectable state, he can repeat the above operation until his intended figure is shifted to the selectable state.

It is of course possible to move the figure under the selected state on the screen in accordance with the operation of the pointing device, or in other words, to execute the dragging operation. The figure data to be dealt with in this embodiment are not particularly limited, and they are dots, line segments, sectional lines, etc, for example.

Incidentally, the selectable state is defined by determining a predetermined range so as to permit only figure data existing inside this range to be shifted to this state. Therefore, if the pointer display is spaced apart more than the predetermined distance from all the figure data, none of these figure data is not allowed to shift to the selectable state. Thus, the figure data does not attain the selectable state freely irrelevantly to the operation of positioning the pointer display. Accordingly, the state does not unintentionally enter the selectable state and operability can be further improved.

In this embodiment, the display mode of the figure data is made different depending on the state of the figure data (the normal state, the selectable state or the selected state). In this case, the display color of the figure can be changed in accordance with the state. Besides the change of the color, the type of line and/or its thickness may also be changed.

As described above, the selectable state is prepared in this embodiment as the state which the figure data can assume, in addition to the normal state and the selected state, and the figure data which exists within a predetermined range from the pointer display corresponding to the pointing device and is closest to the pointer display is allowed to enter the selectable state and to take the different display mode. Accordingly, the figure data which will be selected can be visually confirmed before the select operation is carried out in practice, so that accuracy and efficiency of the select operation can be improved.

Next, a method of and an apparatus for editing two-dimensional data according to the present invention will be explained.

In this embodiment, two-dimensional data which expresses a three-dimensional object in the form of a perspective view projecting the object on a two-dimensional plane includes image data representing the perspective view and vector data representing sectional lines associated with the perspective view, line segments and dots on the sectional lines, perspective lines and vanishing points and these image data and vector-data are displayed in superposition with one another on the screen of the display. A user generates the two-dimensional data corresponding to corrected three-dimensional data obtained by adding desired changes to the three-dimensional object. Next, three-dimensional data representing the corrected three-dimensional object is generated from this two-dimensional data, and simultaneously displayed on the display screen. Incidentally, the term "perspective view" used in this specification includes also photograph, electronic image, sketch, picture, handwritten drawing, etc, which substantially correspond to the perspective view, besides the proper perspective view obtained by projecting a three-dimensional object on a two-dimensional plane.

When expansion/reduction is effected on the vector data in this embodiment, the image data, too, is expanded or reduced at the same ratio. Accordingly, even when expansion/reduction is carried out, the original perspective view and the sectional lines are always kept in the correct postinal relationship, and working efficiency can be improved. To further improve the operation factor, it is possible to change a plurality of continuous line segments into one line segment or to display at least one perspective line passing through a position (point) designated on the screen in accordance with a given instruction. It is also possible to divide one line segment into a plurality of shorter line segments.

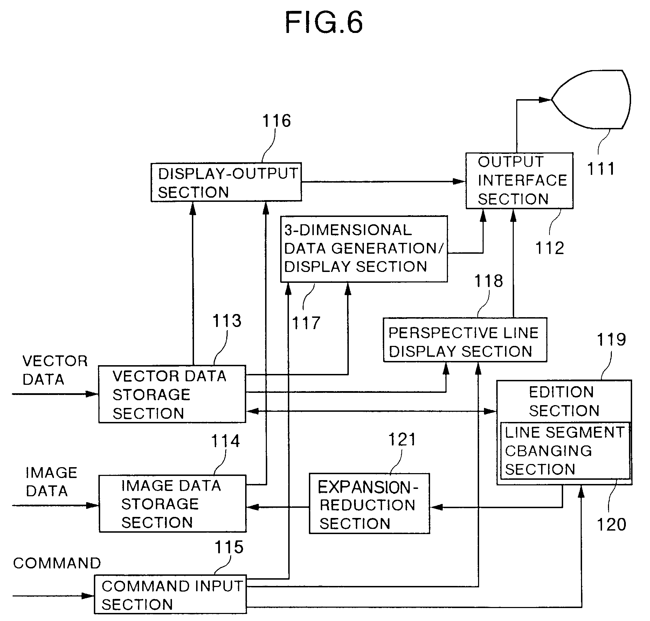

Next, this embodiment will be explained with reference to Figs. 6 to 16.

Fig. 6 is a block diagram showing the construction of an apparatus for executing a method of editing two-dimensional data according to the present invention, and edition commands can be given in the interactive mode.

A display 111 such as a CRT is provided for display, and an output interface section 12 is disposed as an interface to this display 111. The two-dimensional data expressed in the form of the perspective view is divided into vector data representing a line segment or point and image data, and a vector-data storage section 113 and an image data storage section 114 are provided so as to store these data, respectively. Corresponding data are inputted from outside to these data storage sections 113, 114, respectively. The vector data is used for generating the three-dimensional data and is the object of edition. A display output section 116 reads out the data from the vector data storage section 113 and the image data storage section 114, and displays them in superposition on the screen of the display 111 through the output interface section 112. Only one of the vector data and the image data can be displayed by an instruction given from outside, whenever necessary.

A three-dimensional data generation-display section 117 for effecting computation on the basis of the vector data and generating the three-dimensional data is disposed on the output side of the vector-data storage section 113. The resulting three-dimensional data is displayed on the screen of the display 111 from the three-dimensional data generation-display section 117 through the output interface section 112.

Various edition commands are inputted to this edition-display apparatus through a command input section 115 and are supplied to a perspective line display section 118 and an edition section 119. A pointing device such as a mouse or an electronic pen is connected to the command input section 115. By designating one of icons displayed on an icon display section on the screen of the display 111, which indicates a desired command, by a pointer of the pointing device and operating its select button, i.e. the so-called clicking operation, a command specified by the designated icon is inputted. This icon display section will be described hereinafter in more detail. A perspective line display section 118 looks up the data of the vanishing point stored in the vector data storage section 113, calculates the line (perspective line) passing through the position (point) designated by the command and the vanishing point, and displays the calculated perspective line on the display 111 through the output interface section 112. At this time, the perspective line is displayed so as to be superposed on the two-dimensional data.

An edition section 119 executes an edition operation for the vector data by looking up the vector data storage section 113. A line segment changing section 120 is disposed inside the edition section 119. This line segment changing section 120 executes a processing for changing a plurality of selected, continuous line segments into one line segment in accordance with the command inputted through the command input section 115. In this case, the end point of the line segment obtained by the changing processing can be freely set. Further, the plurality of line segments are deleted simultaneously with execution of the changing processing. An expansion-reduction section 121 is interposed between the edition section 119 and the image data storage section 114. When expansion/reduction is effected for the vector data, the expansion-reduction section 121 expands or reduces the image data at the same ratio.

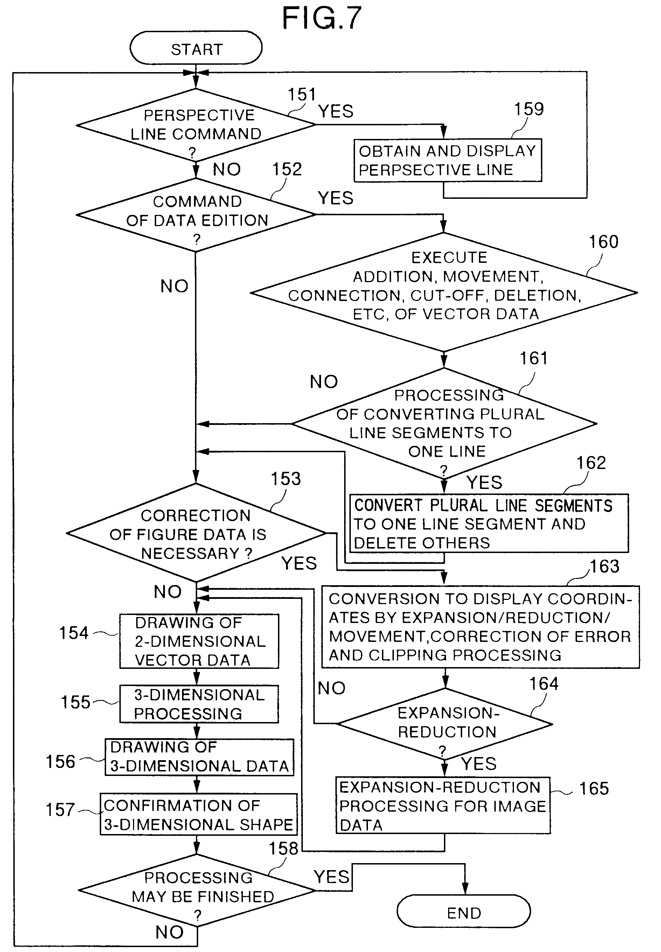

Next, the operation of this edition-display apparatus will be explained with reference to the flowchart shown in Fig. 7.

First, whether or not the inputted command is a perspective line command is judged (step 151). Here, the term "perspective line command" means a command for displaying a perspective line connecting a position designated on the screen to a vanishing point on the screen. When the inputted command is not the perspective line command, the flow proceeds to step 152 and when it is the perspective command, the control shifts to the perspective line display section 118, where the perspective line is calculated and the calculated perspective line is displayed on the screen of the display 111 (step 159). The flow then proceeds to step 152.

At this step 152, whether or not the inputted command is a command for effecting data edition is judged. If it is not the command for effecting data edition, the flow shifts to step 153. When it is the command for effecting data edition, on the other hand, the edition operation such as addition, movement, connection, cut-off, deletion, etc, of the vector data is executed in accordance with the command (step 160), and then, whether or not the processing is the one that converts a plurality of line segments into one line segment is judged (step 161). If it is the processing for converting a plurality of line segments into one line segment, a plurality of line segments are converted into one line segment by the line segment changing section 120 and the original line segments are deleted (step 162). Then, the flow shifts to step 153. If the command is not the one that converts a plurality of line segments into one line segment, the flow directly shifts to step 153. The two-dimensional data thus edited is converted to graphic data suitable for display by the display by a known method.

Whether or not it is required to correct the graphic data to be displayed on the display 111 is judged at step 153. This correction of the graphic data is the one for expanding or reducing the image, either partially or fully, when it is displayed on the display 111, or changing the image position on the display, and an instruction as to what correction is to be made is given by the command display which is displayed in the icon display section. When such a correction is necessary, transformation of the display coordinates for expansion/reduction/movement, correction of the coordinates due to a calculation error, designation of the display position on the screen (clipping), etc, are carried out (step 163). Next, whether or not expansion/reduction of the vector data is executed is judged (step 164). If it is not executed, the flow proceeds to step 154 and if it is executed, expansion/reduction processing for the image data is executed by the expansion/reduction section 21 (step 165). Then, the image data is updated and displayed on the display 111, and the flow proceeds to step 154.

At this step 154, plotting of the vector data to the display 111 is executed and then control shifts to the three-dimensional data generation/display section 117, where the conversion processing of data to three-dimensional data is executed to generate the three-dimensional data (step 155). The method disclosed in the aforementioned Japanese Patent Application No. 4-296775 (U.S. Patent Application Serial No. 08/147,316 or EP Patent Application No. 93 117070.9) is used for the processing for generating the three-dimensional data from the two-dimensional data. The resulting three-dimensional data is plotted on the display 111 (step 156), and the three-dimensional shape expressed by the three-dimensional data is confirmed by the operator (step 157). Whether or not all the procedures may be terminated is judged by the operator's judgement (step 158), and if the judgement proves yes, all the procedures are completed. If the result of judgement proves no, the flow returns to step 151 and the operations described above are repeated.

Next, this embodiment will be explained in further detail with a concrete example thereof.

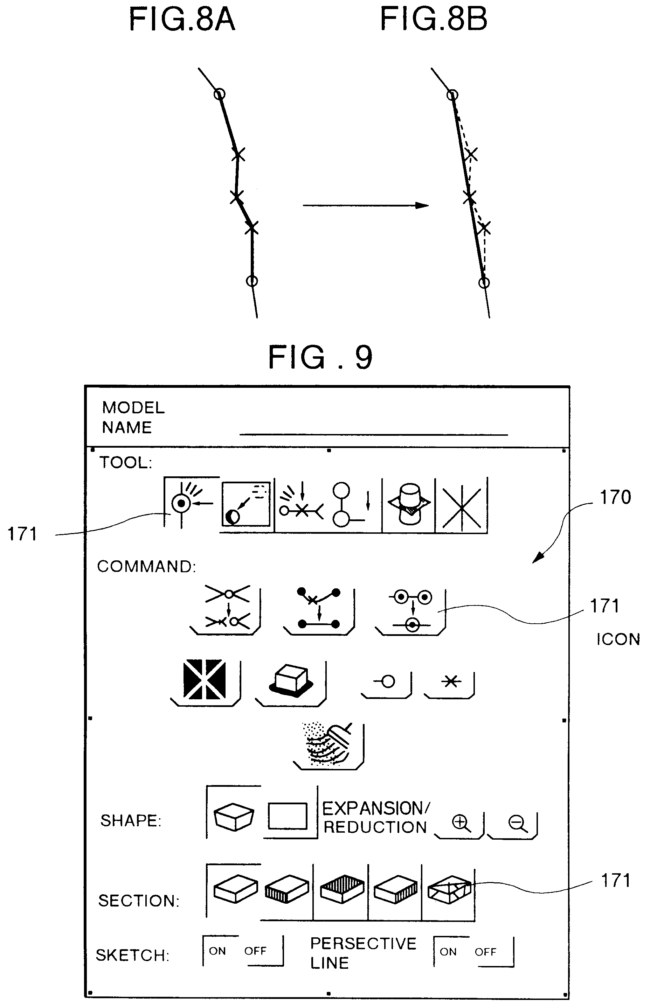

Figs. 8A and 8B are explanatory views for explaining the operation of the processing for converting a plurality of line segments into one line converting a plurality of line segments into one line segment. In the drawings, symbol X represents a passing point of each line segment and ○ represents an end point of the one line segment as converted. When a plurality of continuous line segments indicated by thick lines in Fig. 8A are selected, one line segment indicated by thick line in Fig. 8B is generated when this processing is executed. At this time, the line segments before processing, which are represented by dotted lines in Fig. 8B, are deleted.

Incidentally, in the edition/display apparatus of this embodiment, the command is inputted when an icon 171 displayed in the icon display section 170 disposed at a part of the display screen is clicked by the mouse, or the like. Fig. 9 shows a typical structure of the icon display section 170, and a plurality of icons 171 are displayed in the icon display section 170 correspondingly to the kinds of commands.

In the icon display section 170 shown in Fig. 9, the uppermost line includes icons giving the commands of "selection of point and line movement of point", "movement of figure", "addition of point", "addition of line", "selection of sectional line" and "generation of perspective line" from the left side in that order. The second line includes icons giving the commands of "cut-off of line segment", "conversion of a plurality of continuous line segments into one line segment" and "unification of two points into one point (the line segment between the two points are deleted)" from the left side in that order. The third line includes icons giving the commands of "deletion of perspective line", "return of moved figure to original position", "change of an intermediate point (x) to end point (○)" and "change of end point (○) to intermediate point (x)" from the left side in that order. The single icon of the fourth line is used for the command of "deletion of data".

The icons of the four upper lines are those which are generally used for editing the data. To execute a desired processing, the icon representing the desired processing is selected by the pointer of the pointing device, and the execution command of this processing is inputted to the command input section 115 when the select button is operated (clicked). In the case of the perspective line command at step 151 of Fig. 7, for example, one perspective line is generated so as to pass through a selected point on the screen by selecting the icon of "generation of perspective line" at the extreme right of the uppermost line of the icon display section 170 by the pointer and designating the selected point on the screen by clicking operation of the pointer. It is possible to delete the generated perspective line by using the command of "deletion of perspectived line".

The three lower lines generally represent those icons which are used for the commands of correction. The upper line of these three lines includes the icons giving the commands of "display shape I", "display shape II", "expansion" and "reduction". The display shape can be selected from these display shapes I and II. The intermediate line includes the icons giving the commands of five different modes in display of sections, and one of them can be selected for display of a section when the plotting data are displayed. The left-hand icon of the lowermost line is the one for selecting whether the image data is to be displayed (ON) or not (OFF), and the right-hand icon is the one for selecting whether the perspective line is to be displayed (ON) or not (OFF). The icons for correction are used in the same way as the icons for edition.

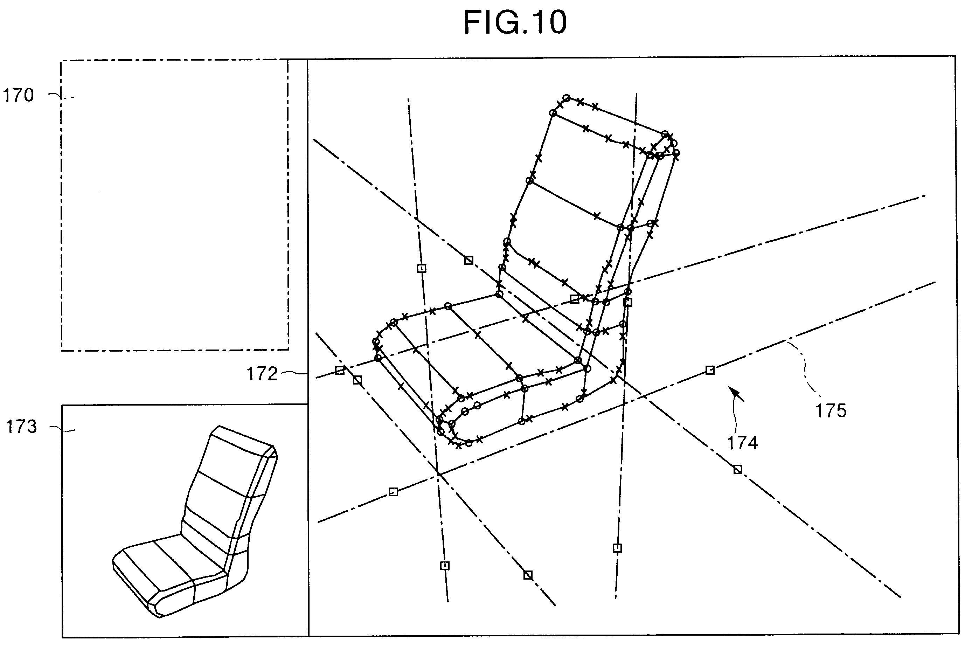

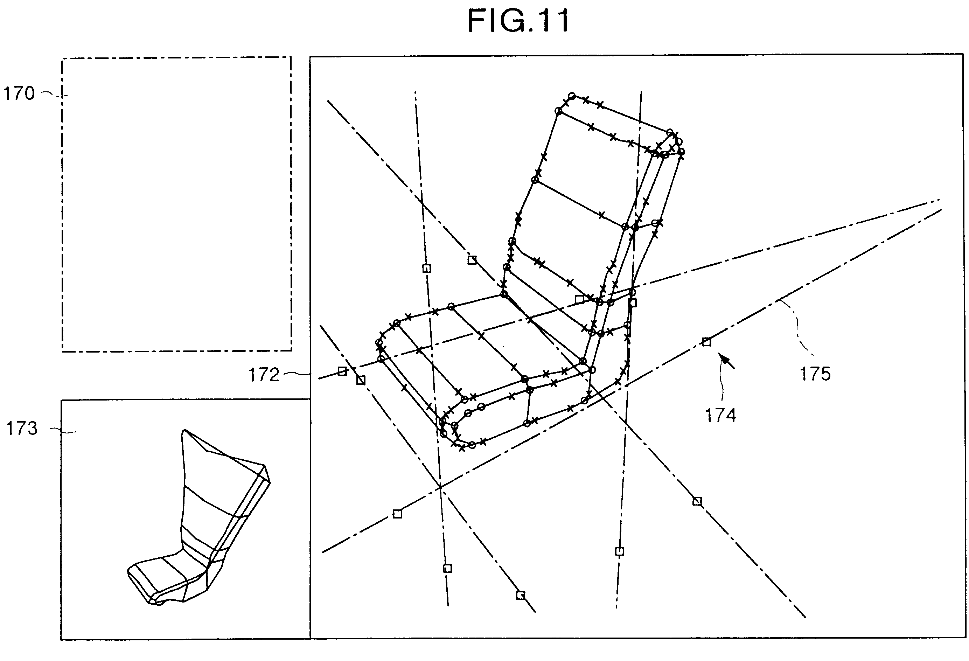

Fig. 10 shows an example of the screen display. The screen is broadly divided into the icon display section 170, the two-dimensional data display section 172 and the three-dimensional data display section 173. Although omitted in Figs. 10 to 16, the icons such as those shown in Fig. 9 are displayed in the icon display section 170 of each figure in practice. The sectional lines (solid lines) and the perspective lines (one-dot chain lines) extracted from the perspective view of the seat of a vehicle are displayed in the two-dimensional data display section 172. The three-dimensional data calculated from the sectional lines as displayed are drawn in the three-dimensional data display section 173. Here, when the edition operation is carried out to change the position of the vanishing point by changing the direction of the perspective line 175 by applying the command by a cursor of the mouse 174, the screen display changes to the one shown in Fig. 11. Let's consider the three-dimensional data display section 173. Then, it can be understood that the three-dimensional data calculated changes, too, with the change of the position of the vanishing point. In this embodiment, the three-dimensional data changes substantially on the real time basis with the edition operation.

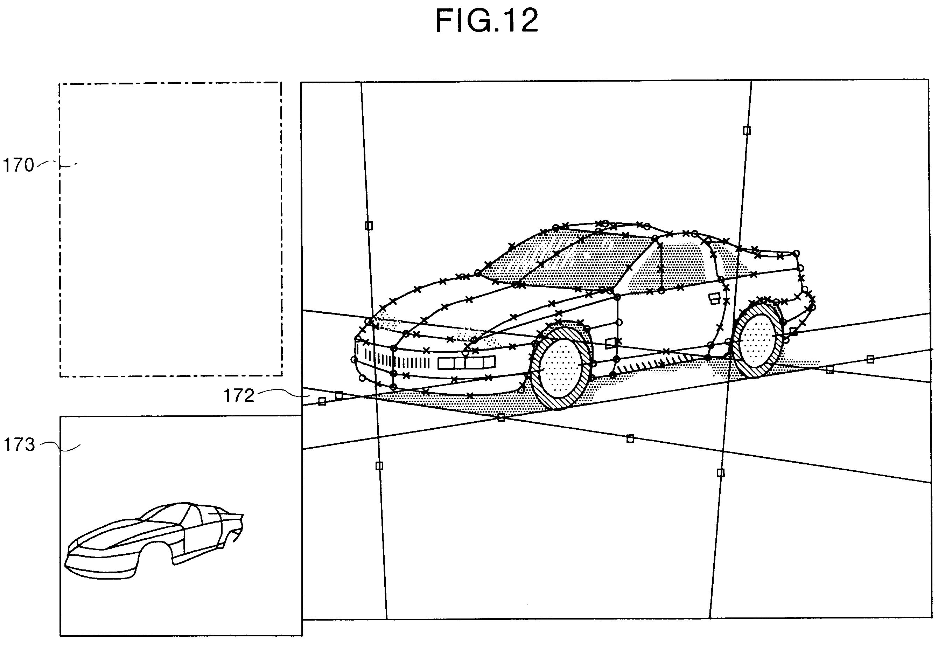

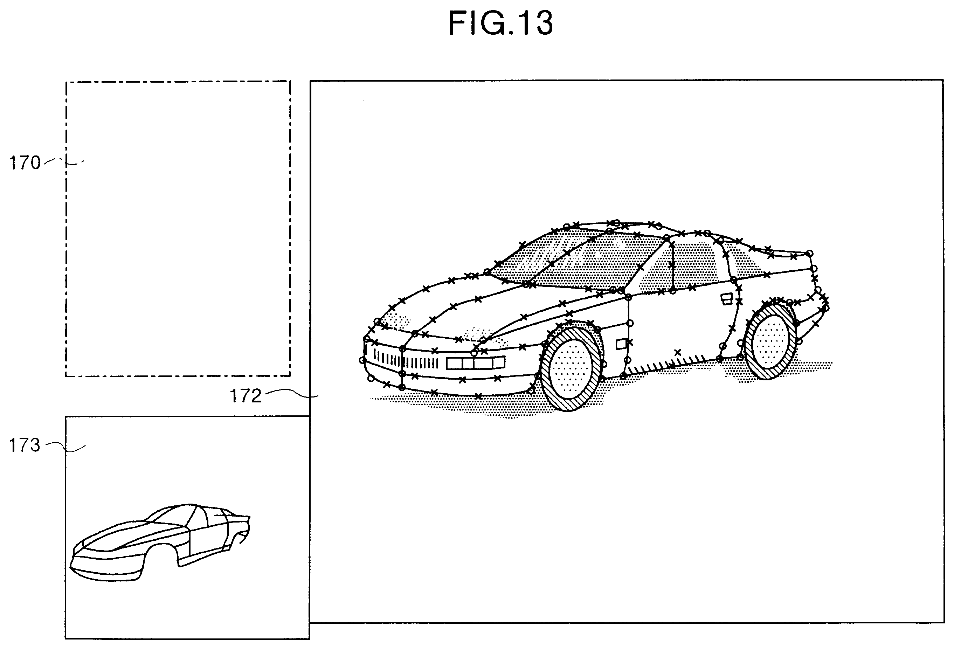

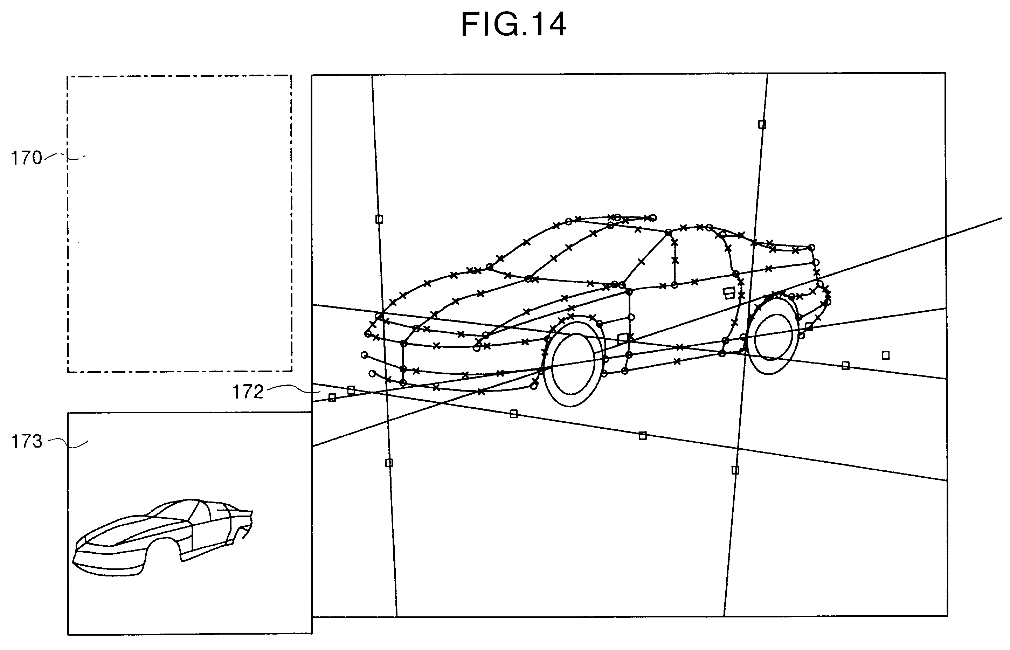

Figs. 12 to 14 show an example of the screen display when a sketch of an automobile is the object of processing. The edition-display apparatus of this embodiment can suitably select and display any of the vector data representing the line or point and the image data. Fig. 12 shows the original sketh (image data), the sectional lines (vector data) and the perspective lines (vector data) in the two-dimensional display section 172. Fig. 13 shows the original sketch and the sectional lines, and Fig. 14 shows the sectional lines and the perspective lines. In either case, the three-dimensional data generated is displayed in the three-dimensional data display section 173.

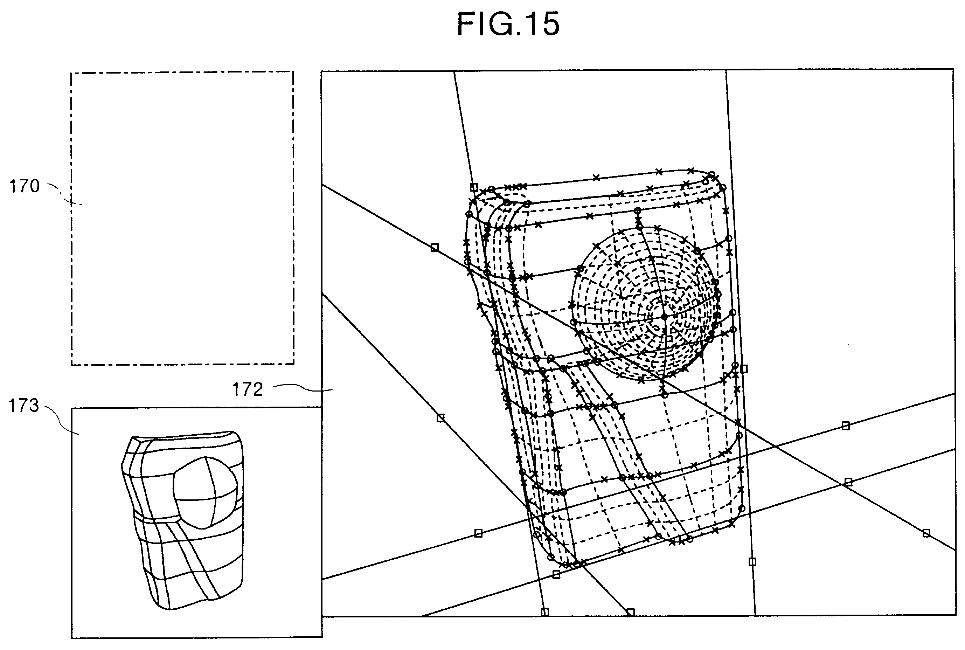

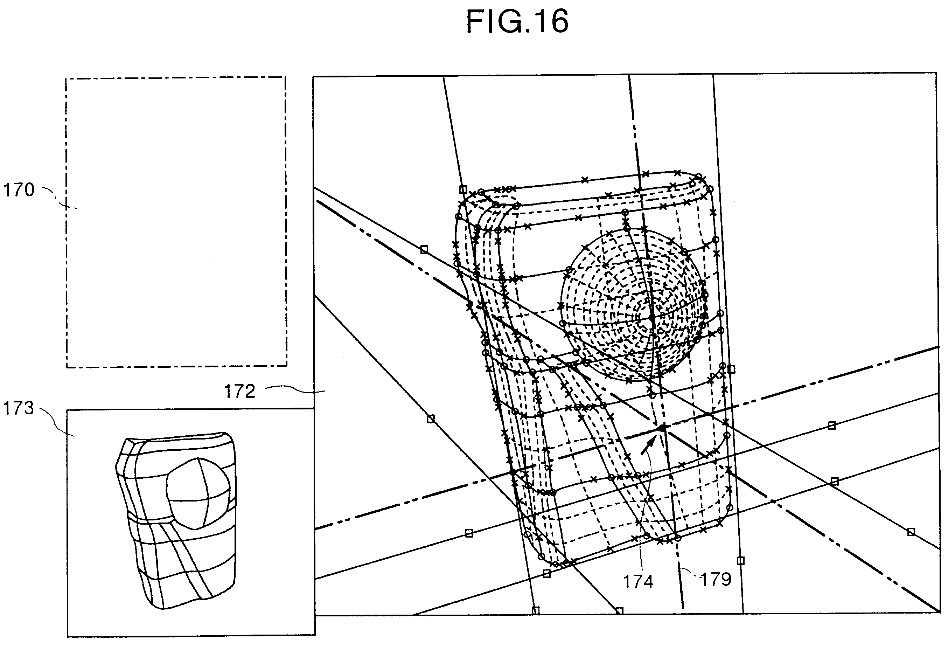

Figs. 15 and 16 are explanatory views useful for explaining the operation of the perspective line command. Fig. 15 shows an example of the screen display when a sketh of a transceiver is the object of processing. Here, when a position is designated by the cursor 174 and the vanishing point command is executed, a line 179 (perspective line) connecting the designated position to the vanishing point is calculated and displayed in superposition on the two-dimensional data in the two-dimensional data display section 172 , as shown in Fig. 16. This line 179 can be effectively used when sectional lines are further added, by looking up this line 179.

As described above, when the image data and the vector data are superposed one another and furthermore, when expansion/reduction is effected for the vector data, the present invention expands or reduces the image data at the same ratio as described above. Since the operation can be carried out while confirming the original perspective view in this way, efficiency as well as accuracy can be improved.

## Claims

1. A method of editing two-dimensional data representing a shape of a three-dimensional object for generating three-dimensional data representing a modification of said three-dimensional object, wherein said two-dimensional data includes image data representing a perspective view of said three-dimensional object and vector data representing line segments and points on a figure associated with said perspective view including at least one sectional line showing a section of said three-dimensional object, said method comprising the steps of:
displaying said image data and said vector data in superposition on a display surface;
correcting said two-dimensional data so as to change at least a part of said figure selected in accordance with the modification of said three-dimensional object, and determining corrected two-dimensional data; and
generating three-dimensional data representing the modification of said three-dimensional object from said corrected two-dimensional data, and displaying said three-dimensional data.

2. A method of editing two-dimensional data according to claim 1, wherein said at least a part of said figure associated with said perspective view includes at least a point and line segment on said sectional line, a visual point of said perspective view and a perspective line connecting said visual point to the point on said section.

3. A method of editing two-dimensional data according to claim 1 or 2, wherein the step of correcting said two-dimensional data includes change of a plurality of continuous line segments on said perspective view to one line segment.

4. A method of editing two-dimensional data according to any of claims 1 to 3, wherein the step of correcting laid two-dimensional data includes an addition of a perspective line connecting a point on said display surface and said visual point of said perspective view.

5. An apparatus for editing two-dimensional data representing a shape of a three-dimensional object for generating three-dimensional data representing a modification of said three-dimensional object, wherein said two-dimensional data includes image data representing a perspective viewe of said three-dimensional object and vector data representing line segments and points on a figure associated with said perspective view including at least one sectional line showing a section of said three-dimensional object, said apparatus comprising:
first memory means (114) for storing said image data;
second memory means (113) for storing said vector data;
display means (111) having a display surface;
means (116) for displaying said figure associated with said perspective view represented by said vector data and said perspective view of said three-dimensional object represented by said image data in superposition on said display surface, on the basis of said image data and said vector data stored in said first and second memory means, respectively;
command input means (115) for inputting a
command relating to a mode of correction of said vector data corresponding to a desired modification of said three-dimensional object;
means (119) for applying correction corresponding to said command to said two-dimensional data on the basis of said command, thereby generating corrected two-dimensional data; and
means (117) for generating corrected three-dimensional data representing the modification of said three-dimensional object on the basis of said corrected two-dimensional data, and displaying said corrected three-dimensional data on said display surface.

6. An apparatus for editing two-dimensionaL data according to claim 5, wherein said correction means includes means for correcting said vector data according to the modification of said three-dimensional object, and correcting said image data correspondingly to said correction.

7. An apparatus for editing two-dimensional data according to claim 5 or 6, wherein said command inputted to said command input means (115) includes a command of correction for changing a plurality of continuous line segments on the figure associated with said perspective view to one line segment.

8. An apparatus for editing two-dimensional data according to any of claims 5 to 7, wherein said command inputted to said command input means (115) includes a command for adding a perspective line connecting a point on said display surface to a visual point of said perspective view.

9. A method of editing two-dimensional data representing a shape of a three-dimensional object for generating three-dimensional data representing a modification of said three-dimensional object, wherein said two-dimensional data includes image data representing a perspective view of said three-dimensional object and vector data representing line segments and points on a figure associated with said perspective view including at least one sectional line showing a section of said three-dimensional object, said method comprising the steps of:
displaying said image data and said vector-data in superposition on one display screen;
selecting at least a part of said figure associated with said perspective view according to the modification of said three-dimensional object;
correcting said two-dimensional data so as to change said selected part of the figure and determining corrected two-dimensional data; and
generating three-dimensional data representing the modification of said three-dimensional object from said corrected two-dimensional data, and displaying said three-dimensional data;
wherein said step of selecting at least a part of said figure associated with said perspective view comprises the following substeps:
dividing said figure associated with said perspective view into a plurality of partial figures, and displaying said partial figures on said display screen such that they can be distinguished from one another;
designating each of said partial figures displayed on said display screen to any one of a first state where said partial figure is not permitted to receive a predetermined processing, a second state where said partial figure is ready for receiving said predetermined processing and a third state where said partial figure is receiving said predetermined processing, and at least the partial figure designated to said first state and the partial figure designated to said second state are displayed in visually different display modes;
selecting one of said partial figures as displayed on said display surface; and
changing the designation of the state of said selected one partial figure to said second state when it is designated to said first state.

10. An apparatus for editing two-dimensional data representing a shape of a three-dimensional object for generating three-dimensional data representing a modification of said three-dimensional object, wherein, said two-dimensional data includes image data representing a perspective view of said three-dimensional object and vector data representing line segments and points on a figure associated with said perspective view including at least one sectional line showing a section of said three-dimensional object, said apparatus comprising:
means (116) for displaying said image data and said vector data on a display surface;
means for selecting at least a part of said figure associated with said perspective view according to the modification of said three-dimensional object;
means (119) for correcting said two-dimensional data so as to change said selected part of the figure and determining corrected two-dimensional data; and
means (117) for generating three-dimensional data representing the modification of said three-dimensional object from said corrected two-dimensional data, and displaying said three-dimensional data;
wherein said means for selecting at least a part of said figure associated with said perspective view comprises:
means for dividing said figure associated with said perspective view into a plurality of partial figures, and displaying said partial figures on said display surface such that they can be distinguished from one another;
means for designating each of said partial figures displayed on said display surface to any of a first state where said partial figure is not permitted to receive a predetermined processing, a second state where said partial figure is ready for receiving said predetermined processing and a third state where said partial figure is receiving said predetermined processing, and for displaying at least said partial figure designated to said first state and said partial figure designated to said second state in visually different display modes; and
means for selecting one of said partial figures displayed on said display surface and changing the state of said selected partial to said second state when said selected partial figure is designated to said first state.
